# EUROPEAN PATENT APPLICATION

(11) **EP 2 990 571 A1**
(43) Date of publication of application: **02.03.2016**
(21) Application number: 14198417.9
(22) Date of filing: 17.12.2014
(51) Int. Cl.: E05B 71/00, E05B 45/00, B62H 5/20, B62J 11/00, B62J 6/02, E05B 47/00, E05B 17/10

(54) **System and method for managing bicycles, motorcycles and the like**

(30) Priority: 01.09.2014 CN 201410440340
(71) Applicant: Looq Systems Inc, Santa Clara, CA 95054 (US)
(72) Inventor: YU, Woody, CA95054 (US)
(74) Representative: Verriest, Philippe

(57) **Abstract**

A lock management system (100) for using a portable device (120) to manage a lock for bicycles (110), motorcycles and the like is disclosed. The lock comprising a wireless communicating module (112), configured for establishing a wireless connection with the portable device (120), and receiving an instruction associated with an access credential from the portable device (120) through the wireless connection; and a control module (114), coupled to the wireless communicating module (112) and configured for determining whether the access credential provides a right to control the lock (110) based on the instruction received by the wireless communicating module (112), and controlling the lock (110) according to the instruction from the portable device (120) if the access credential provides the right to control the lock (110).

## Description

### FIELD OF THE PRESENT TEACHING

The present teaching relates to system and method for managing bicycles, motorcycles and the like, and more particularly to system and method for using a portable device to manage bicycles, motorcycles and the like.

### BACKGROUND

Nowadays, bicycles, motorcycles and the like are the most popular mode of transport. Take bicycles for example, a conventional bicycle requires the user to lock or unlock a bicycle lock with one or two keys. However, since the bicycle lock usually does not have an alarm unit and a positioning unit, it brings some security risk to the bicycle. In addition, sometimes it is difficult for users to find keys from their belongings, and sometimes users cannot unlock the bicycle lock due to the loss of key, which will reduce the user experience.

Therefore, there is a need for an improved system and method for managing bicycles, motorcycles and the like, which can overcome the above drawbacks and improve the user experience.

### SUMMARY

In one embodiment, a lock management system for using a portable device to manage a lock for bicycles, motorcycles and the like is disclosed. The lock comprising a wireless communicating module, configured for establishing a wireless connection with the portable device, and receiving an instruction associated with an access credential from the portable device through the wireless connection; and a control module, coupled to the wireless communicating module and configured for determining whether the access credential provides a right to control the lock based on the instruction received by the wireless communicating module, and controlling the lock according to the instruction from the portable device if the access credential provides the right to control the lock.

In another embodiment, a lock for bicycles, motorcycles and the like is disclosed. The lock comprising a wireless communicating module, configured for establishing a wireless connection with a portable device, and receiving an instruction associated with an access credential from the portable device through the wireless connection; and a control module, coupled to the wireless communicating module and configured for determining whether the access credential provides a right to control the lock based on the instruction received by the wireless communicating module, and controlling the lock according to the instruction from the portable device if the access credential provides the right to control the lock.

In yet another embodiment, a lock management method for using a portable device to manage a lock for bicycles, motorcycles and the like is disclosed. The method comprising establishing a wireless connection with the portable device; receiving an instruction associated with an access credential from the portable device through the wireless connection; determining whether the access credential provides a right to control the lock based on the received instruction, and controlling the lock according to the instruction from the portable device if the access credential provides the right to control the lock.

Additional benefits and novel features will be preset forth in part in the description which follows, and in part will become apparent to those skilled in the art upon examination of the following and the accompanying drawings or may be learned by production or operation of the disclosed embodiments. The benefits of the present embodiments may be realized and attained by practice or use of various aspects of the methodologies, instrumentalities and combinations set forth in the detailed description set forth below.

### BRIEF DESCRIPTION OF THE DRAWINGS

Features and benefits of embodiments of the claimed subject matter will become apparent as the following detailed description proceeds, and upon reference to the drawings, wherein like numerals depict like parts. These exemplary embodiments are described in detail with reference to the drawings. These embodiments are non-limiting exemplary embodiments, in which like reference numerals represent similar structures throughout the several views of the drawings.
FIG. 1 illustrates an exemplary block diagram of a lock management system, in accordance with an embodiment of the present teaching;
FIG. 2 illustrates an exemplary block diagram of a control module in FIG. 1, in accordance with an embodiment of the present teaching;
FIG. 3 illustrates an exemplary block diagram of a lock in FIG. 1, in accordance with an embodiment of the present teaching; and
FIG. 4 is an exemplary block diagram of the lock in FIG. 1, in accordance with an embodiment of the present teaching; and
FIG. 5 is a flowchart illustrating a lock management method, in accordance with an embodiment of the present teaching.

### DETAILED DESCRIPTION

Reference will now be made in detail to the embodiments of the present teaching. While the present teaching will be described in conjunction with these embodiments, it will be understood that they are not intended to limit the present teaching to these embodiments. On the contrary, the present teaching is intended to cover alternatives, modifications and equivalents, which may be included within the spirit and scope of the present teaching as defined by the appended claims.

Furthermore, in the following detailed description of the present teaching, numerous specific details are set forth in order to provide a thorough understanding of the present teaching. However, it will be recognized by one of ordinary skill in the art that the present teaching may be practiced without these specific details. In other instances, well known methods, procedures, components, and circuits have not been described in detail as not to unnecessarily obscure aspects of the present teaching.

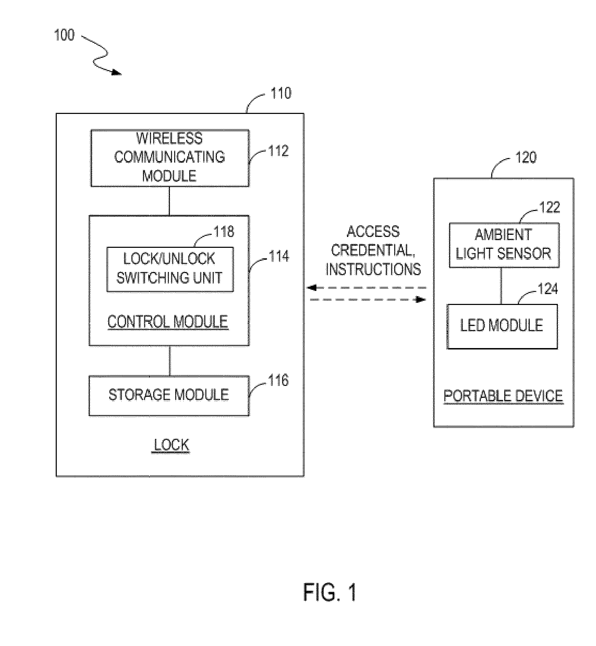

FIG. 1 illustrates an exemplary block diagram of a lock management system 100, in accordance with an embodiment of the present teaching. The lock management system 100 can be applied to bicycles, motorcycles and the like, For clear and clarity, below embodiments take bicycles for examples to illustrate, which is intended only for illustration and for disclosure of an operative embodiment and not to show all of the various forms or modification in which the present invention might be operated (for example, motorcycles). The lock management system 100 includes a bicycle lock 110 applied to a bicycle (not shown) and a portable device 120. The portable device 120 may be, but not limited to a mobile phone, a tablet computer, a multimedia player, a personal digital assistant, a video game or other portable devices with a function of wireless communication.

The bicycle lock 110 includes a wireless communicating module 112, a control module 114, and a storage module 116. The wireless communicating module 112 is configured for establishing a wireless connection with the portable device 120, and to receive access credentials and instructions from the portable device 120 through the wireless connection. The access credentials can be in the form of numbers, letters, patterns, or any combination thereof. The connection between the wireless communicating module 112 and the portable device 120 can be based on a short-range wireless protocol such as a Near Field Communication (NFC), Bluetooth, Bluetooth LE connection, or Wi-Fi connection, or based on a long-range network such as a cellular data network (e.g., a 2G/3G cellular network).

The control module 114 coupled to the wireless communicating module 112 is configured for determining whether a user of the portable device 120 has a control right to control the bicycle lock 110 based on the instructions associated with the access credential received from the portable device 120. For example, if the received access credential matches with a pre-stored access credential (e.g., stored in the storage module 116), which indicates that the user of the portable device 120 has the control right, then the control module 114 can operate the bicycle lock 110 according to the instructions from the portable device 120.

More specifically, if the control module 114 determines that the user of the portable device 120 has the control right to control the bicycle lock 110, then the portable device 120 may be allowed to send instructions to control the bicycle lock 110. For example, the portable device 120 can control a lock/unlock switching unit 118 in the control module 114 to lock or unlock the bicycle lock 110. The lock/unlock switching unit 118 is configured for determining whether a distance between the bicycle lock 110 and the portable device 120 is smaller than a predetermined distance. If the distance between the bicycle lock 110 and the portable device 120 is smaller than the predetermined distance, and if the control module 114 determines that the user of the portable device 120 has the control right to control bicycle lock 110, the lock/unlock switching unit 118 can lock or unlock the bicycle lock 110 according to user's demand. In one embodiment, the lock/unlock switching unit 118 determines whether the distance between the bicycle lock 110 and the portable device 120 is within the predetermined distance (e.g., 30 meters) based on the communication protocol between the wireless communicating module 112 and the portable device 120. The predetermined distance can be based on a maximum communication distance allowed for establishing a wireless connection. For example, the maximum communication distance for successfully establishing a Bluetooth connection is 30 meters. If the communication protocol between the wireless communicating module 112 and the portable device 120 applies a Bluetooth communication protocol, the lock/unlock switching unit 118 can determine that the distance between the bicycle lock 110 and the portable device 120 is within 30 meters when the wireless connection is established successfully.

In an embodiment, if the control module 114 of the bicycle lock 110 determines that the user of the portable device 120 has the control right to control the bicycle lock 110, when the user steps, again in the future, into a region which is within the predetermined distance from the bicycle lock 110, the bicycle lock 110 is unlocked automatically without any manual operations. The user can get on his/her bicycle and ride off. On the other hand, if the user steps out of the region, the wireless connection between the bicycle lock 110 and the portable device 120 breaks down. The bicycle lock 110 will be locked automatically. For example, if the communication protocol between the wireless communicating module 112 and the portable device 120 is a Bluetooth communication protocol, and the maximum communication distance for successfully establishing a Bluetooth connection is 30 meters, whenever the user is farther than 30 meters from bicycle lock 110, the bicycle lock 110 will be locked automatically. As a result, if the distance between the bicycle lock 110 and the portable device 120 is beyond the predetermined distance, or if the control module 114 determines that the user of the portable device 120 does not have the control right to control the bicycle lock 110, the bicycle lock 110 remains locked and cannot be operated. In this way, the portable device 120 with the control right can act as a security key of the bicycle lock 110, according to the distance between the bicycle lock 110 and the portable device 120.

In another embodiment, the communication protocol between the wireless communicating module 112 and the portable device 120 is in accordance with the NFC standard, and the maximum communication distance for successfully establishing a NFC connection is 20 centimeters, In an embodiment, if the control module 114 of the bicycle lock 110 determines that the user of the portable device 120 has the control right to control the bicycle lock 110, when the user steps, again in the future, into a region which is within the predetermined distance (e.g. 20 centimeters) from the bicycle lock 110, the bicycle lock 110 is unlocked automatically without any manual operations. On the other hand, whenever the user is farther than 20 centimeters meters from bicycle lock 110, the bicycle lock 110 will be locked automatically, As a result, if the distance between the bicycle lock 110 and the portable device 120 is beyond the predetermined distance, or if the control module 114 determines that the user of the portable device 120 does not have the control right to control the bicycle lock 110, the bicycle lock 110 remains locked and cannot be operated. In this way, the portable device 120 with the control right can act as a security key of the bicycle lock 110, according to the distance between the bicycle lock 110 and the portable device 120.

Please note that, the above-discussed functions for automatically unlocking/locking can be arbitrarily set by users, depending on their individual needs. For example, the user can only enable the function for automatically unlocking, while disabling the fuction for automatically locking, and vise versa.

In one preferred embodiment, the portable device 120 can download a lock management application software associated with the bicycle lock 110 from various mobile application software distribution platforms such as Google^{®} Android Market, Apple^{®} App Store, and Palm^{®} Software Store, etc.

The lock management application software can provide a visual interface to the user for entering access credentials and related instructions, setting body parameters, e.g., gender, age, height, and weight, and setting ride parameters, e.g., starting point, destination, target arrival time, etc. According to those body parameters and ride parameters, the lock management application software can utilize a locating unit (e.g., a module with GPS positioning functionality) within the portable device 120 to show current speed, plan riding route, calculate calorie consumption, guide the riding route and show its current position, etc. The lock management application software can further query the weather forecast through the internet, and for example, remind the user to take an umbrella if it might rain. More specifically, the lock management application software can adaptively adjust its visual interface (e.g. a dashboard interface) according to the current speed. For example, if the current speed is higher than 50 km/h, the lock management application software can determine that the user is riding a motorcycle rather than a bicycle, and then the bicycle dashboard interface is changed to a motorcycle dashboard interface. Compared to the bicycle dashboard interface, the motorcycle dashboard can have a larger speed range, which is not the limitation of the present invention.

The lock management application software of the present embodiment can further achieve headlight functionality. More specifically, the portable device 120 can include an ambient light sensor 122 and a light emitting diode (LED) module 124. The ambient light sensor 122 is configured for sensing the lighting condition of the portable device 120. The LED module 124 coupled to the ambient light sensor 122 is configured for functioning as a headlight according to the sensing result. For example, when the ambient light sensor 122 determines that it is dark outside, the LED module 124 turns on automatically. Alternatively, the LED module 124 can also controlled by the user of the portable device 120. For example, when the user of the portable device 120 thinks that it is dangerous to ride a bicycle (e.g., too dark), he/she can turn on the headlight functionality on the lock management application software. In this way, the LED module 124 turns on and the portable device 120 is transformed into the headlight, in order to protect the user against accidents.

In addition, the lock management application software of the present embodiment can further achieve social functionality. For example, before the user of the portable device 120 starts riding bicycle, he can send related GPS information to a server through the internet, including starting point, destination, target arrival time, etc, and also request the server to check other nearby devices. Accordingly, the server will return a list of nearby devices within a predetermined range and their specific GPS information (e.g., starting point, destination, target arrival time, etc) to the portable device 120. The user of the portable device 120 can select specific users according to the GPS information of the nearby devices and then there can be a conversation between those users with a same or similar riding route. For example, those users with the same or similar riding route can make arrangements with each other to meet at an assembly point and then ride to the destination together.

It is anticipated that utilizing the portable device as a virtual key of the bicycle lock can relieve the users of the bother of physical keys, thus improving the user experience. Furthermore, the lock management application software associated with the bicycle lock can bring rich functionalities to users, which can greatly improve the enjoyment of riding bicycles.

Although above embodiments are described with the single portable device 120, those skilled in the art will recognize that the user of the portable device 120 can share the access credentials associated with the bicycle lock 110 with his family members or friends, e.g., through network, message, or phone call. Then, other users informed of the access credentials can use another portable device different from the portable device 120 to obtain a control right to control (e.g. lock or unlock) the bicycle lock 110 and a usage right of the bicycle. Therefore, bicycles can be shared in a convenient and economical way.

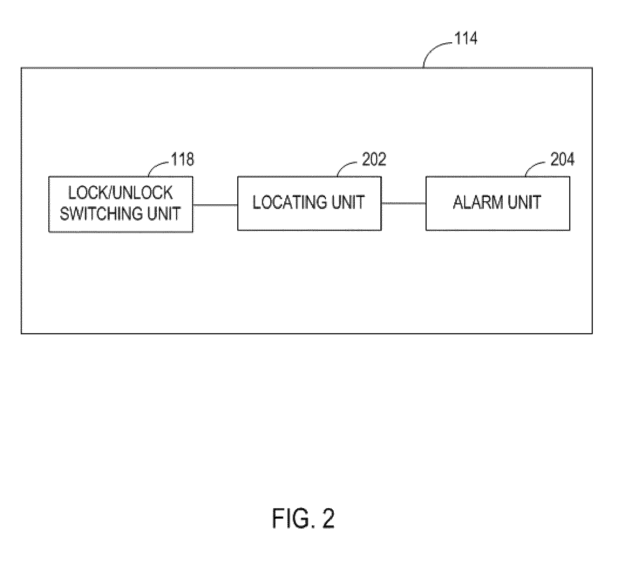

FIG. 2 illustrates an exemplary block diagram of the control module 114 in FIG. 1, in accordance with an embodiment of the present teaching. Elements that are labeled with the same numerals in FIG. 1 have similar functions. Compared with FIG. 1, the control module 114 in the FIG. 2 further includes a locating unit 202 and an alarm unit 204.

The locating unit 202 is configured for acquiring a current location of the bicycle (i.e., the current location of the bicycle lock 110). In one embodiment, the locating unit 202 can be a unit that utilizes Global Position System (GPS) to obtain its current position. In another embodiment, the locating unit 202 can acquire the current location of the bicycle lock 110 through the assistance of a portable device, e.g., the portable device 120 that wirelessly connects with the bicycle lock 110 and has a function of positioning.

In one embodiment, when arriving at a predetermined place, the locating unit 202 can send a message to the current connected portable device or other devices (e.g., a device has a function of wireless communicating). The message includes information indicating that the bicycle (i.e., the bicycle lock 110) has arrived at the predetermined place. For example, a patrol captain can set a target place in a patrolling mission of a patrol officer as the predetermined place. When the patrol officer reaches the place, the bicycle lock 110 will send the message to the portable device carried by the patrol officer wirelessly, for example, via the wireless communicating module 112. The patrol officer can transmit the message to the patrol captain as an evidence of his fulfillment of his daily patrolling mission. Alternatively, the bicycle lock 110 can directly send the message to the portable device carried by the patrol captain.

In addition, when connected to the bicycle lock 110 via the wireless communicating module 112, the user of the portable device 120 may optionally transmit an instruction to selectively activate or disable the locating unit 202 of the bicycle lock 110. Advantageously, the locating unit 202 can be used to achieve anti-theft functionality. In one embodiment, the locating unit 202 can combine the wireless communicating module 112 to periodically report its current location to a default device (e.g., the portable device 120 or other devices having wireless communicating function). For example, if the change of the current location of the bicycle lock 110 is greater than a predetermined distance (e.g., 30 meters) and there is no wireless connection between the bicycle lock 110 and any portable device, it is detected that the bicycle is probably stolen. Then the locating unit 202 can report its current location to a default device (e.g., the portable device 120 or other devices having wireless communicating function). In this way, the user can know the bicycle lost and its current location to find the stolen bicycle in time.

In the example of FIG. 2, the lock/unlock switching unit 118 is operable for comparing the current bicycle location indicated by the locating unit 202 and the current portable device location indicated by the portable device 120, thus determining whether a distance between the bicycle lock 110 and the portable device 120 is within a predetermined distance.

The alarm unit 204 coupled to the locating unit 202 is operable for giving the alarm according to the current bicycle location indicated by the locating unit 202 or one or more instructions from the portable device 120. In one embodiment, if the locating unit 202 detects that the change of the current location of the bicycle lock 110 is greater than a predetermined distance (e.g., 30 meters) and there is no wireless connection between the wireless communicating module 112 and any portable device, it means that the bicycle is probably stolen. Then the locating unit 202 may send a control signal to the alarm unit 204 so that the alarm unit 204 gives a high decibel alarm to scare away thieves. The alarm unit 204 can also be coupled to a temperature sensor and/or a pressure sensor, etc (not shown). If those sensors detects that the bicycle lock 110 are under attack (e.g., thieves try to saw off the bicycle lock 110), the alarm unit 204 can also give a high decibel alarm to scare away thieves. Furthermore, the user can actively send an alarm instruction from the portable device 120 to the wireless communicating module 112 so that the alarm unit 204 gives a high decibel alarm to help the user find his bicycle from others.

Advantageously, the bicycle lock 110 itself can be made of waterproof, anti-corrosion, and anti-shear material to protect the bicycle lock from bad weather and thieves. Besides, the alarm unit 204 combining with the locating unit 202 can excellently achieve anti-theft function and prevent damage to users' property.

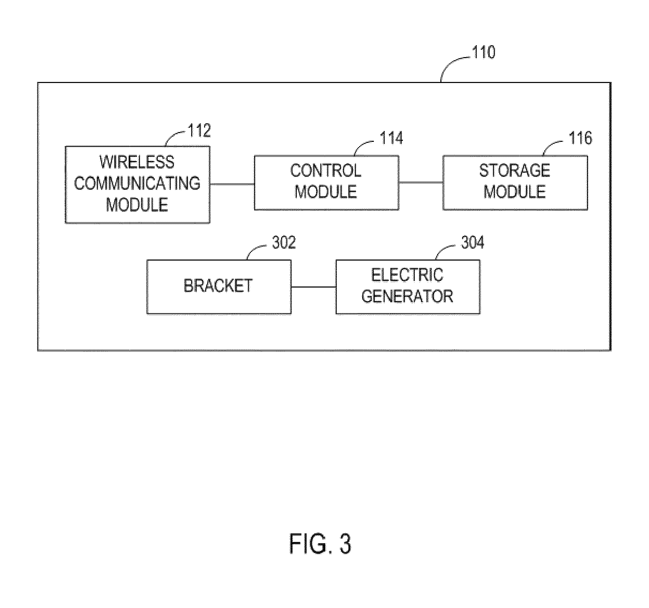

FIG. 3 illustrates an exemplary block diagram of the lock (e.g., the bicycle lock 110 in FIG. 1), in accordance with an embodiment of the present teaching. Elements that are labeled with the same numerals in FIG. 1 have similar functions. Compared with FIG. 1, the bicycle lock 110 in the FIG. 3 further includes a bracket 302 and an electric generator 304.

In the example of FIG. 3, the bicycle lock 110 is applied to the front wheel of the bicycle. The bracket 302 of the bicycle lock 110 is mounted on the handlebar of the bicycle to fix the portable device 120 to facilitate the interaction between users and the portable device 120. For example, the user can view and operate the portable device 120 while riding the bicycle. Please note that, although FIG. 3 shows the bracket 302 is integrated into the bicycle lock 110, the bracket can also be separated from the bicycle lock 110 and there is a coupling bar between the bracket 302 and the bicycle lock 110.

The electric generator 304 coupled to the bracket 302 is operable for generating electricity having a voltage that corresponds to the bicycle speed (i.e., rotational speed of the front wheel). Then the electricity is supplied to the bracket 302 via a power wire. For example, the bracket 302 can include a charging cable (not shown) to enable the user to charge the portable device 120 while riding the bicycle. Please note that, although FIG. 3 shows the electric generator 304 is integrated into the bicycle lock 110, the electric generator can also be separated from the bicycle lock 110. For example, the electric generator can be incorporated in the front wheel and coupled to the bracket 302 to supply power.

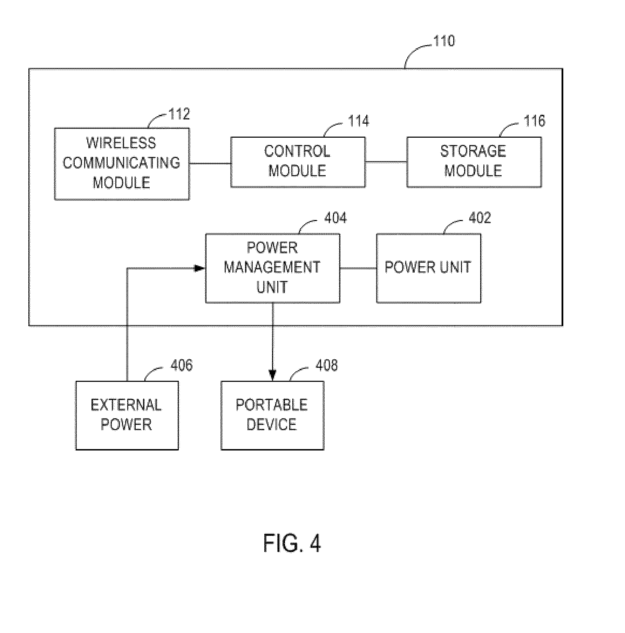

FIG. 4 shows an exemplary block diagram of the lock (e.g., the bicycle lock 110 in FIG. 1), in accordance with another embodiment of the present teaching. Elements that are labeled with the same numerals in FIG. 1 have similar functions. Compared with FIG. 1, the bicycle lock 110 in the FIG. 4 further includes a power unit 402 and a power management unit 404.

In the example of FIG. 4, the power unit 402 provides power for the bicycle lock 110. The power unit 402 can include one or more batteries, e.g., rechargeable lithium batteries or lead-acid batteries, which is not the limitation of the present application. The power management unit 404 coupled to the power unit 402 manages charging and discharging of the power unit 402. For the charging function, the power management unit 404 is coupled between the power unit 402 and an external power 406 (e.g., 220V AC source). The power management unit 404 receives power from the external power 406, e.g. via USB, MicroUSB or MiniUSB interface structure, and then supplies power to the power unit 402 (e.g., rechargeable batteries). For the discharging function, the power management unit 404 is coupled between the power unit 402 and a portable device 408 (e.g., a mobile phone). For example, if the portable device 408 is out of power, the power management unit 404 can help transmit electricity from the power unit 402 to the portable device 408. The discharging interface of terminal with the Android operating system is usually MicroUSB, the charging interface of terminal with the IOS operating system is the Lighting 8pin interface. In this way, users can easily charge the bicycle lock and/ or charge the portable device with the bicycle lock.

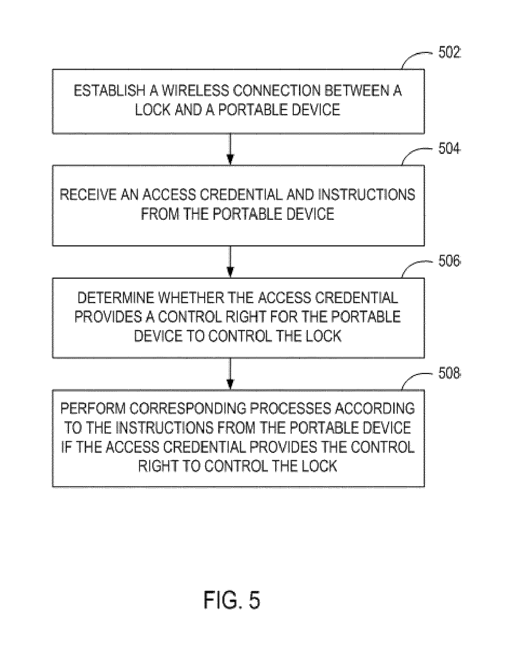

FIG. 5 is a flowchart illustrating a lock management method, in accordance with an embodiment of the present teaching. It will be described with reference to FIG. 1 to FIG. 4; however, it is not limited to those embodiments.

At block 502, a wireless connection is established between a lock and a portable device. For example, the bicycle lock 110 uses the wireless communicating module 112 to establish a wireless connection with the portable device 120. The connection between the wireless communicating module 112 and the portable device 120 can be based on a short-range wireless protocol such as a Near Field Communication (NFC), Bluetooth, Bluetooth LE connection, or Wi-Fi connection, or based on a long-range network such as a cellular data network (e.g., a 2G/3G cellular network).

At block 504, the lock receives an access credential and one or more instructions from the portable device through the wireless connection. The access credentials can be in the form of numbers, letters, patterns, or any combination thereof. The one or more instructions from the portable device 120 can control the lock/unlock switching unit 118 in the control module 114 to lock or unlock the bicycle lock 110. In the example of FIG. 2, the user of the portable device 120 may optionally transmit an instruction to selectively activate or disable the locating unit 202 of the bicycle lock 110. Furthermore, the user can actively send an alarm instruction from the portable device 120 to the wireless communicating module 112 so that the alarm unit 204 gives a high decibel alarm to help the user find his bicycle from others. Those skilled in the art will recognize that above instructions are only given for illustrative purposes, and it is not the limitation of the present embodiments.

At block 506, it is determined whether the access credential provides a control right for the portable device to control the lock. If the access credential provides the control right, the process goes to 508. Otherwise, if the access credential does not provide the control right, the process goes back to 504. For example, if the received access credential matches with a pre-stored access credential (e.g., stored in the storage module 116), it is determined that the access credential provides the control right to the user of the portable device 120.

At block 508, if the access credential provides the control right, the bicycle lock performs corresponding one or more processes according to the one or more instructions received from the portable device. For example, if the control module 114 determines that the user of the portable device 120 has the control right to control the bicycle lock 110, then the portable device 120 can control the lock/unlock switching unit 118 in the control module 114 to lock or unlock the bicycle lock 110. As discussed above, the user can actively send an alarm instruction from the portable device 120 to the wireless communicating module 112 so that the alarm unit 204 gives a high decibel alarm to help the user find his bicycle from others.

In one embodiment, the lock management method can further include steps: if the control module 114 of the bicycle lock 110 determines that the user of the portable device 120 has the control right to control the bicycle lock 110, when the user steps, again in the future, into a region which is within the predetermined distance from the bicycle lock 110, the bicycle lock 110 is unlocked automatically without any manual operations. The user can get on his/her bicycle and ride off. On the other hand, if the user steps out of the region, the wireless connection between the bicycle lock 110 and the portable device 120 breaks down. The bicycle lock 110 will be locked automatically.

In one embodiment, the lock management method can further include steps: the user of the bicycle utilizes a lock management application software associated with the bicycle lock 110 to set body parameters, e.g., gender, age, height, and weight, and to set ride parameters, e.g., starting point, destination, target arrival time, etc. According to those body parameters and ride parameters, the lock management application software can utilize a locating unit (e.g., a module with GPS positioning functionality) within the portable device 120 to plan riding route, calculate calorie consumption, guide the riding route and show its current position, etc. The lock management application software can further query the weather forecast through the internet, and for example, remind the user to take an umbrella if it might rain. More specifically, the lock management application software can adaptively adjust its visual interface (e.g. a dashboard interface) according to the current speed. For example, if the current speed is higher than 50 km/h, the lock management application software can determine that the user is riding a motorcycle rather than a bicycle, and then the bicycle dashboard interface is changed to a motorcycle dashboard interface. Compared to the bicycle dashboard interface, the motorcycle dashboard can have a larger speed range, which is not the limitation of the present invention.

In one embodiment, the lock management method can further include steps: before the user of the portable device 120 starts riding bicycle, he can send related GPS information to a server through the internet, including starting point, destination, target arrival time, etc, and also request the server to check other nearby devices. Accordingly, the server will return a list of nearby devices within a predetermined range and their specific GPS information (e.g., starting point, destination, target arrival time, etc) to the portable device 120. The user of the portable device 120 can select specific users according to the GPS information of the nearby devices and then there can be a conversation between those users with a same or similar riding route. For example, those users with the same or similar riding route can make arrangements with each other to meet at an assembly point and then ride to the destination together.

In one embodiment, the lock management method can further include steps: the user of the portable device 120 can share the access credentials associated with the bicycle lock 110 with his family members or friends, e.g., through network, message, or phone call. Then, other users informed of the access credentials can use another portable device different from the portable device 120 to obtain a control right to control (e.g. lock or unlock) the bicycle lock 110 and a usage right of the bicycle. Therefore, bicycles can be shared in a convenient and economical way.

In one embodiment, the lock management method can further include steps: when arriving at a predetermined place, the locating unit 202 can send a message to the current connected portable device or other devices (e.g., a device has a function of wireless communicating). The message includes information indicating that the bicycle (i.e., the bicycle lock 110) has arrived at the predetermined place. For example, a patrol captain can set a target place in a patrolling mission of a patrol officer as the predetermined place. When the patrol officer reaches the place, the bicycle lock 110 will send the message to the portable device carried by the patrol officer wirelessly, for example, via the wireless communicating module 112. The patrol officer can transmit the message to the patrol captain as an evidence of his fulfillment of his daily patrolling mission. Alternatively, the bicycle lock 110 can directly send the message to the portable device carried by the patrol captain.

In one embodiment, the lock management method can further include steps: the locating unit 202 can combine the wireless communicating module 112 to periodically report its current location to a default device (e.g., the portable device 120 or other devices having wireless communicating function). For example, if the change of the current location of the bicycle lock 110 is greater than a predetermined distance (e.g., 30 meters) and there is no wireless connection between the bicycle lock 110 and any portable device, it is detected that the bicycle is probably stolen. Then the locating unit 202 can report its current location to a default device (e.g., the portable device 120 or other devices having wireless communicating function). In this way, the user can know the bicycle lost and its current location to find the stolen bicycle in time. At the same time, the locating unit 202 may send a control signal to the alarm unit 204 so that the alarm unit 204 gives a high decibel alarm to scare away thieves.

In one embodiment, the lock management method can further include steps: the electric generator 304 coupled to the bracket 302 generates electricity having voltage that corresponds to the bicycle speed (i.e., rotational speed of the front wheel). Then the electricity is supplied to the bracket 302 via a power wire. For example, the bracket 302 can include a charging cable (not shown) to enable the user to charge the portable device 120 while riding the bicycle.

Advantageously, utilizing the portable device as a virtual key of the lock for bicycles, motorcycles and the like can relieve the users of the bother of physical keys, thus improving the user experience. Furthermore, the lock management application software associated with the lock can bring rich functionalities to users, which can greatly improve the enjoyment of riding bicycles, motorcycles and the like. Besides, the alarm unit 204 combining with the locating unit 202 can excellently achieve anti-theft function and prevent damage to users' property.

Those skilled in the art will recognize that the embodiments of the present teaching are amenable to a variety of modifications and/or enhancements. For example, although the implementation of various components described above may be embodied in a hardware device, it can also be implemented as a software only solution e.g., an installation on an existing server. In addition, the dynamic relation/event detector and its components as disclosed herein can be implemented as firmware, a firmware/software combination, a firmware/hardware combination, or a hardware/firmware/software combination.

While the foregoing description and drawings represent embodiments of the present teaching, it will be understood that various additions, modifications and substitutions may be made therein without departing from the spirit and scope of the principles of the present teaching as defined in the accompanying claims. One skilled in the art will appreciate that the teaching may be used with many modifications of form, structure, arrangement, proportions, materials, elements, and components and otherwise, used in the practice of the teaching, which are particularly adapted to specific environments and operative requirements without departing from the principles of the present teaching. The presently disclosed embodiments are therefore to be considered in all respects as illustrative and not restrictive, the scope of the teaching being indicated by the appended claims and their legal equivalents, and not limited to the foregoing description.

## Claims

1. A lock management system, for using a portable device to manage a lock for bicycles, motorcycles and the like, the lock comprising:
a wireless communicating module, configured for establishing a wireless connection with the portable device, and receiving an instruction associated with an access credential from the portable device through the wireless connection; and
a control module, coupled to the wireless communicating module and configured for
determining whether the access credential provides a right to control the lock based on the instruction received by the wireless communicating module, and
controlling the lock according to the instruction from the portable device if the access credential provides the right to control the lock.

2. The lock management system of claim 1, wherein
the control module comprises a storage module, coupled to the wireless communicating module and configured for storing a predetermined access credential, and wherein the control module compares the received access credential and the predetermined access credential to determine whether the access credential provides the right to control the lock.

3. The lock management system of claim 1 or 2, wherein the control module comprises:
a lock/unlock switching unit, configured for determining whether a distance between the lock and the portable device is smaller than a predetermined distance, and
if the distance between the lock and the portable device is smaller than the predetermined distance, and if the control module determines that the access credential provides the right to control the lock, the lock/unlock switching unit is configuring for locking or unlocking the lock based on the instruction received by the wireless communicating module.

4. The lock management system of claim 3, wherein
if the distance between the lock and the portable device is smaller than the predetermined distance, and if the control module determines that the access credential provides the right to control the lock, the lock/unlock switching unit is configuring for unlocking the lock automatically; and
if the distance between the lock and the portable device is greater than the predetermined distance, the lock/unlock switching unit is configuring for locking the lock automatically.

5. The lock management system of claim 4, wherein the communication protocol between the wireless communicating module and the portable device is in accordance with the NFC standard.

6. The lock management system of one of claims 1 to 5, wherein the control module comprises:
a locating unit, configured for acquiring a current location of the lock, and periodically or conditionally reporting the current location to the portable device.

7. The lock management system of claim 6, wherein the control module further comprises:
an alarm unit, coupled to the locating unit and configured for giving the alarm according to the current location indicated by the locating unit or the instruction from the portable device,
wherein if the locating unit detects that the change of the current location is greater than a predetermined distance and there is no wireless connection between the wireless communicating module and the portable device, the locating unit is operable for sending a control signal to the alarm unit so that the alarm unit gives the alarm.

8. The lock management system of one of claims 1 to 7, wherein the bicycle lock further comprises:
a bracket, operable for fixing the portable device to facilitate the interaction with the portable device.

9. The lock management system of claim 8, wherein the lock further comprises:
an electric generator, coupled to the bracket and operable for generating electricity having a voltage that corresponds to the speed of bicycles, motorcycles and the like.

10. The lock management system of one of claims 1 to 9, wherein the lock further comprises:
a power unit, configured for providing power for the lock; and
a power management unit, coupled to the power unit and configured for managing charging and discharging of the power unit,
wherein the power management unit is coupled between the power unit and an external power, and configured for receiving power from the external power and supplying power from the external power to the power unit, and
wherein the power management unit is further coupled between the power unit and the portable device, and configured for transmitting electricity from the power unit to the portable device.

11. The lock management system of one of claims 1 to 10, wherein the portable device is operable for displaying current speed and/or calorie consumption and/or riding route and/or a list of nearby devices.

12. The lock management system of claim 11, wherein the portable device adaptively adjusts its visual interface according to the current speed.

13. The lock management system of one of claims 1 to 12, wherein the portable device comprises:
an ambient light sensor, configured for sensing the lighting condition of the portable device; and
a light emitting diode (LED) module, coupled to the ambient light sensor and configured for functioning as a headlight according to the sensing result.

14. A lock for bicycles, motorcycles and the like, comprising:
a wireless communicating module, configured for establishing a wireless connection with a portable device, and receiving an instruction associated with an access credential from the portable device through the wireless connection; and
a control module, coupled to the wireless communicating module and configured for
determining whether the access credential provides a right to control the lock based on the instruction received by the wireless communicating module, and
controlling the lock according to the instruction from the portable device if the access credential provides the right to control the lock.

15. The lock of claim 14, wherein
the control module comprises a storage module, coupled to the wireless communicating module and configured for storing a predetermined access credential, and wherein the control module compares the received access credential and the predetermined access credential to determine whether the access credential provides a right to control the lock.

16. The lock of claim 14 or 15, wherein the control module comprises:
a lock/unlock switching unit, configured for determining whether a distance between the lock and the portable device is smaller than a predetermined distance, and
if the distance between the lock and the portable device is smaller than the predetermined distance, and if the control module determines that the access credential provides the right to control the lock, the lock/unlock switching unit is configuring for locking or unlocking the lock based on the instruction received by the wireless communicating module.

17. The lock of claim 16, wherein
if the distance between the lock and the portable device is smaller than the predetermined distance, and if the control module determines that the access credential provides the right to control the lock, the lock/unlock switching unit is configuring for unlocking the lock automatically; and
if the distance between the lock and the portable device is greater than the predetermined distance, the lock/unlock switching unit is configuring for locking the lock automatically.

18. The lock of one of claims 14 to 17, wherein the control module comprises:
a locating unit, configured for acquiring a current location of the lock, and periodically or conditionally reporting the current location to the portable device.

19. The lock of claim 18, wherein the control module further comprises:
an alarm unit, coupled to the locating unit and configured for giving the alarm according to the current location indicated by the locating unit or the instruction from the portable device,
wherein if the locating unit detects that the change of the current location is greater than a predetermined distance and there is no wireless connection between the wireless communicating module and the portable device, the locating unit is operable for sending a control signal to the alarm unit so that the alarm unit gives the alarm.

20. The lock of one of claims 14 to 19, wherein the lock further comprises:
a bracket, operable for fixing the portable device to facilitate the interaction with the portable device.

21. The lock of claim 20, wherein the lock further comprises:
an electric generator, coupled to the bracket and operable for generating electricity having a voltage that corresponds to the speed of bicycles, motorcycles and the like.

22. The lock of one of claims 14 to 21, wherein the lock further comprises:
a power unit, configured for providing power for the lock; and
a power management unit, coupled to the power unit and configured for managing charging and discharging of the power unit,
wherein the power management unit is coupled between the power unit and an external power, and configured for receiving power from the external power and supplying power from the external power to the power unit, and
wherein the power management unit is further coupled between the power unit and the portable device, and configured for transmitting electricity from the power unit to the portable device.

23. A lock management method, for using a portable device to manage a lock for bicycles, motorcycles and the like, the method comprising:
establishing a wireless connection with the portable device;
receiving an instruction associated with an access credential from the portable device through the wireless connection;
determining whether the access credential provides a right to control the lock based on the received instruction, and
controlling the lock according to the instruction from the portable device if the access credential provides the right to control the lock.

24. The method of claim 23, further comprising:
comparing the received access credential and a pre-stored access credential to determine whether the access credential provides the right to control the lock.

25. The method of claim 23 or 24, further comprising:
determining whether a distance between the lock and the portable device is smaller than a predetermined distance, and
if the distance between the lock and the portable device is smaller than the predetermined distance, and if it is determined that the access credential provides the right to control the lock, locking or unlocking the lock based on the received instruction.

26. The method of claim 25, further comprising:
if the distance between the lock and the portable device is smaller than the predetermined distance, and if it is determined that the access credential provides the right to control the lock, unlocking the lock automatically; and
if the distance between the lock and the portable device is greater than the predetermined distance, locking the lock automatically.

27. The method of one of claims 23 to 26, further comprising:
acquiring a current location of the lock, and
periodically or conditionally reporting the current location to the portable device.

28. The method of claim 27, further comprising:
giving the alarm according to the current location or the instruction from the portable device,
wherein if it is detected that the change of the current location is greater than a predetermined distance and there is no wireless connection with the portable device, giving the alarm.

29. The method of one of claims 23 to 28, further comprising:
generating electricity having a voltage that corresponds to the speed of bicycles, motorcycles and the like, and
supplying the electricity to the portable device via a power wire of a bracket of the lock.

30. The method of one of claims 23 to 29, further comprising:
displaying current speed and/or calorie consumption and/or riding route and/or a list of nearby devices.

31. The method of claim 30, further comprising:
adaptively adjusting a visual interface on the portable device according to the current speed.
